# EUROPEAN PATENT SPECIFICATION

(11) **EP 4 189 813 B1**
(45) Date of publication and mention of the grant of the patent: **26.02.2025**
(21) Application number: 21752196.2
(22) Date of filing: 28.07.2021
(51) Int. Cl.: H02K 15/04

(54) **APPARATUS AND METHOD FOR MANUFACTURING COIL MEMBERS FOR INSERTION INTO SLOTS OF THE CORE OF A DYNAMO-ELECTRIC MACHINE**
VORRICHTUNG UND VERFAHREN ZUR HERSTELLUNG VON SPULENELEMENTEN ZUM EINSETZEN IN NUTEN DES KERNS EINER DYNAMOELEKTRISCHEN MASCHINE
APPAREIL ET PROCÉDÉ DE FABRICATION D'ÉLÉMENTS DE BOBINE DESTINÉS À ÊTRE INSÉRÉS DANS DES FENTES DU NOYAU D'UNE MACHINE DYNAMO-ÉLECTRIQUE

(30) Priority: 03.08.2020 IT 202000019003
(43) Date of publication of application: 07.06.2023
(73) Proprietor: Atop SpA, 50028 Barberino Tavernelle (FI) (IT)
(72) Inventor: PONZIO, Massimo, 50021 Barberino Val d'Elsa ( FI) (IT); CORBINELLI, Rubino, 53036 Staggia Senese (SI) (IT); MUGELLI, Maurizio, 53037 San Gimignano (SI) (IT)
(74) Representative: Vitillo, Giuseppe
(86) International application number: PCT/IB2021/056859
(87) International publication number: WO 2022/029566

(56) References cited:
- EP-A1- 3 114 757
- EP-B1- 3 114 757
- WO-A2-2012/156066
- US-A1- 2012 200 190

## Description

### Technical field

The present invention relates to an apparatus and a method for manufacturing coil members for insertion into slots of the core of a dynamo-electric machine.

### Technical background

In the field of dynamo-electric machines, it is known to use apparatuses and methods for manufacturing coil members to be housed in respective slots formed in the cores of such machines.

Coil members can be used in stators of electric motors or electric generators. In this respect, a number of solutions have been disclosed in International patent application No. WO 2012/156066.

Coil members made in accordance with the present invention may have a fork-like shape or other shapes as well, e.g. they may have an undulated configuration. Generally, the electric conductor has a relatively large cross-section, which permits the formed coil member to be self-supporting, i.e. the shape of the coil member is permanently formed according to a specific geometric configuration, which will not change unless considerable bending forces are applied thereto. Fork-shaped coil members are commonly called "hairpins" in the industry. Another shape, i.e. the undulated configuration, is described in European patent publication EP 1 372 242.

A typical production sequence involving formed hairpins may envisage the following: inserting specific hairpins into respective slots of the core of the dynamo-electric machine, bending the end portions of the hairpins that extend beyond an end of the core of the dynamo-electric machine, welding together predetermined hairpin ends that have become adjacent to each other as a result of the previous bending operation. International patent application WO 2012/119691 describes operations of this kind and solutions to ensure an accurate alignment of the hairpin ends that need to be welded together.

The bending necessary for making a coil member requires repeated steps of feeding predetermined lengths of an electric conductor in alignment with a bending tool, as described in the above-mentioned International patent application WO 2012/156066.

During the feeding steps, a bending tool engages the electric conductor and makes some predetermined movements to cause the electric conductor to be permanently bent into a desired shape.

A cutting operations is carried out in order to remove a formed coil member from the rest of the electric conductor, so that such electric conductor can subsequently be fed for making other coil members. International patent application WO 2012/156066 describes operations carried out in accordance with these principles.

Furthermore, an apparatus and a method for manufacturing coil members of the above-specified type are also described in International patent application WO 2015/132180.

### Summary of the invention

It is one object of the present invention to provide an apparatus and a method for manufacturing coil members for insertion into slots of the core of a dynamo-electric machine, which are an improvement over the prior art.

In particular, according to the present invention, higher accuracy and repeatability are attained in the bending of the conductor.

According to the present invention, this and other objects are achieved through an apparatus and a method having the technical features set out in the appended independent claims.

It is understood that the appended claims are an integral part of the technical teachings provided in the following detailed description of the present invention. In particular, the appended dependent claims define some preferred embodiments of the present invention that include some optional technical features.

Further features and advantages of the present invention will become apparent in light of the following detailed description, provided merely as a non-limiting example and referring, in particular, to the annexed drawings as summarized below.

### Brief description of the drawings

Figure 1 is a perspective view of a coil member corresponding to a hairpin configuration having a rectangular cross-section, which can be manufactured by following the teachings of the present invention.
Figure 2 is a view in the direction indicated by arrow 2 in Figure 1.
Figure 2a is a partial view similar to the view of Figure 1, which shows a partially filled slot of a core of a dynamo-electric machine.
Figure 3 is a view that is very similar to the view of Figure 2, which shows a coil member having an undulated configuration.
Figure 4 is a longitudinal sectional view in elevation of a part of the apparatus obtained in accordance with an exemplary embodiment of the present invention.
Figure 5 is a partial perspective view of the apparatus of Figure 4, wherein it is possible to see a pressing member configured for selectively moving and engaging the conductor.
Figure 6 is a partial perspective view of the apparatus of Figure 4, obtained in accordance with a further exemplary embodiment of the present invention, which incorporates a pressing member which is different from the one shown in Figure 5.
Figure 7 is a partial perspective view of a longitudinal section of a part of the apparatus shown in Figure 6.
Figure 8 is a front plan view of the pressing member of the apparatus shown in Figures 6 and 7.
Figure 9 is a lateral elevation view sectioned along line IX-IX of Figure 8, wherein one can see the pressing member shown in Figures 6 to 8.

### Detailed description of the invention

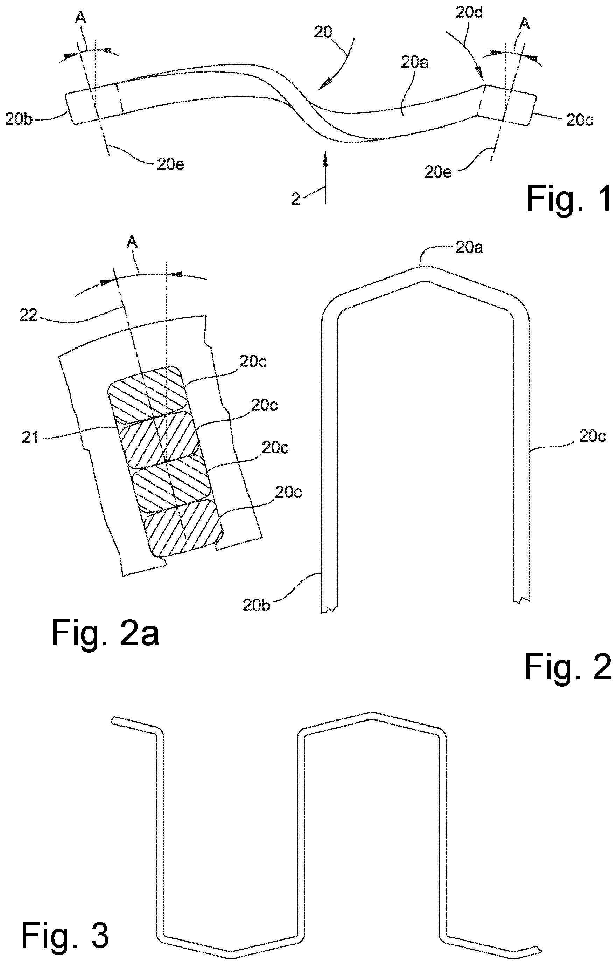

With particular reference to Figures 1-2, 2a and 3, there is shown a coil member 20 corresponding to a hairpin manufactured in accordance with the teachings of the present invention, starting from an electric conductor 300 having a rectangular cross-section. As shown in Figures 1 and 2, the hairpin has leg portions 20b and 20c, which are substantially straight, and a head portion 20a. A twisted portion, designated as 20d, is adapted to orient the leg portions by an angle A, so that axes 20e of leg portions 20b and 20c are aligned with radial axis 22 of a slot 21 of a core (e.g. a stator core, as shown in Figure 2a), into which leg portions 20c are fully inserted.

The coil member (not numbered) of Figure 3 has an undulated configuration, which can be obtained by following the teachings of the present invention, as will be made clear hereinafter.

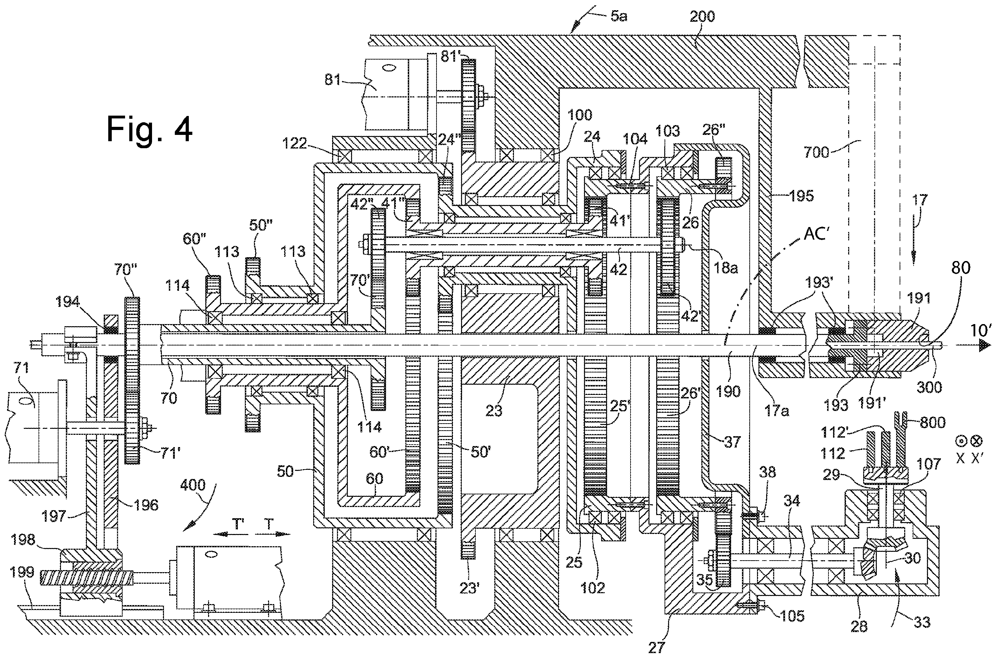

With particular reference to Figure 4, there is shown a longitudinal section of an apparatus for manufacturing coil members, like those described above, starting from conductor 300. The apparatus is made as illustrated in International patent application WO 2015/132180,. The number references shown in Figure 4 of the present patent application correspond to those described and illustrated in the above-mentioned International patent application WO 2015/132180, and therefore, for the sake of clarity and completeness, they are shown in such figure as they appear in said International patent application. As will be described below, Figure 4 only represents one possible example of an apparatus to which the teachings of the present invention are applicable.

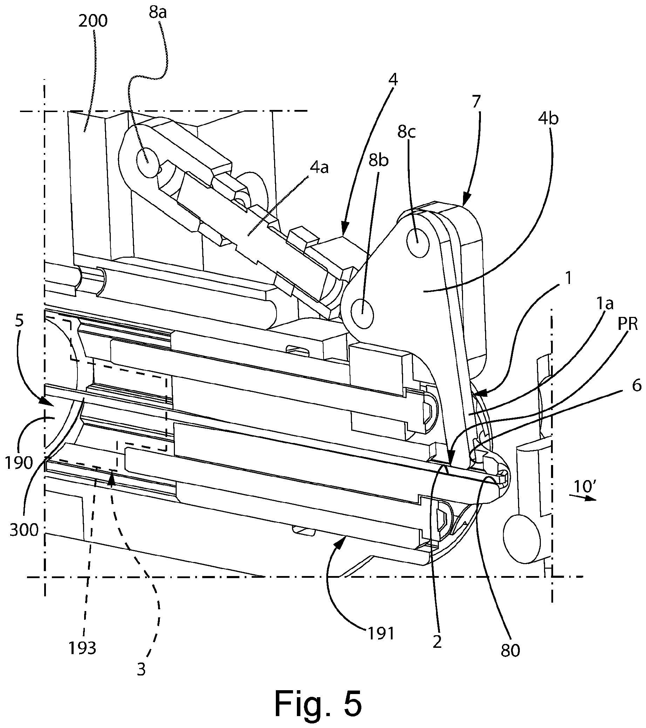

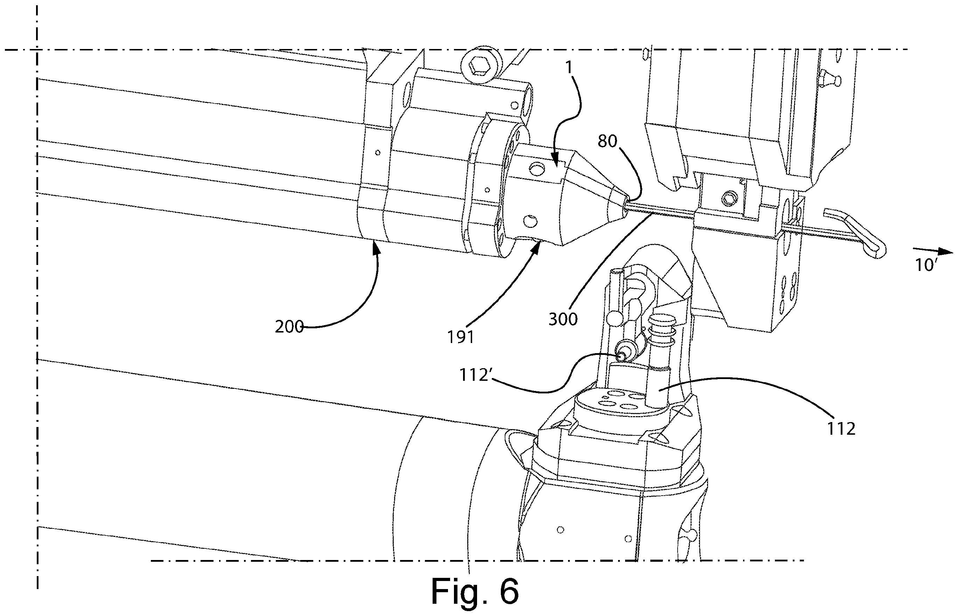

The apparatus comprises feeding means of a *per se* known type, which are configured for feeding portions of conductor 300 having a predetermined length through an aperture 80. One example of such feeding means has been described in International patent application WO 2012/156066. In such International patent application, the feeding means are provided in the form of a pair of motorized belts pressing on conductor 300 and, by friction, applying a pull/thrust force to conductor 300. A further example of such feeding means has been described in International patent application WO 2018/092022. With reference to Figures 5 and 6 of such international patent application, the feeding means include a pair of clamping units, each one of which is configured for clamping the electric conductor by means of a pair of jaws. In a *per se* known way, each pair of jaws can hold and release the electric conductor in a co-ordinated and intermittent manner, driven by the clamping units, in order to feed it as desired.

With particular reference to Figure 4, the portions of conductor 300 are fed by the feeding means along a feeding axis AC' in a feeding direction 10' and adjacent to one or more engagement members 112, 112' capable of engaging conductor 300. Aperture 80 is positioned before engagement members 112, 112' in feeding direction 10'.

Furthermore, the apparatus comprises moving means, also of a *per se* known type, configured for moving engagement members 112, 112' with respect to aperture 80 to engage a portion of conductor 300 with the engagement members in a transverse direction (designated by letters X and X', represented in Figure 4 as a • and an x encircled by respective circles to indicate an outgoing direction and, respectively, an incoming direction in the sheet plane) with respect to the feeding axis AC' for bending conductor 300. One example of such moving means has been described in the above-mentioned International patent application WO 2015/132180, from which Figure 4 was taken, and therefore reference should be made to the descriptive text of such International patent application for a description of such moving means.

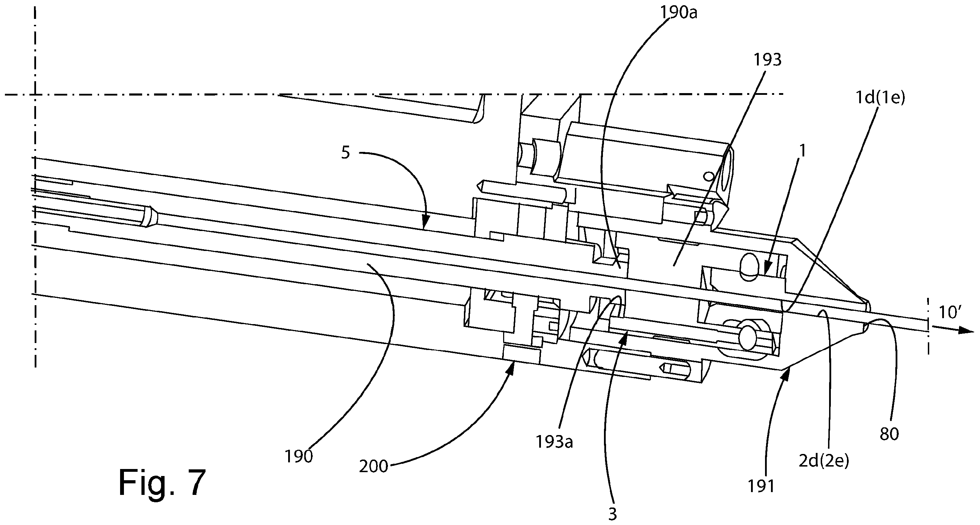

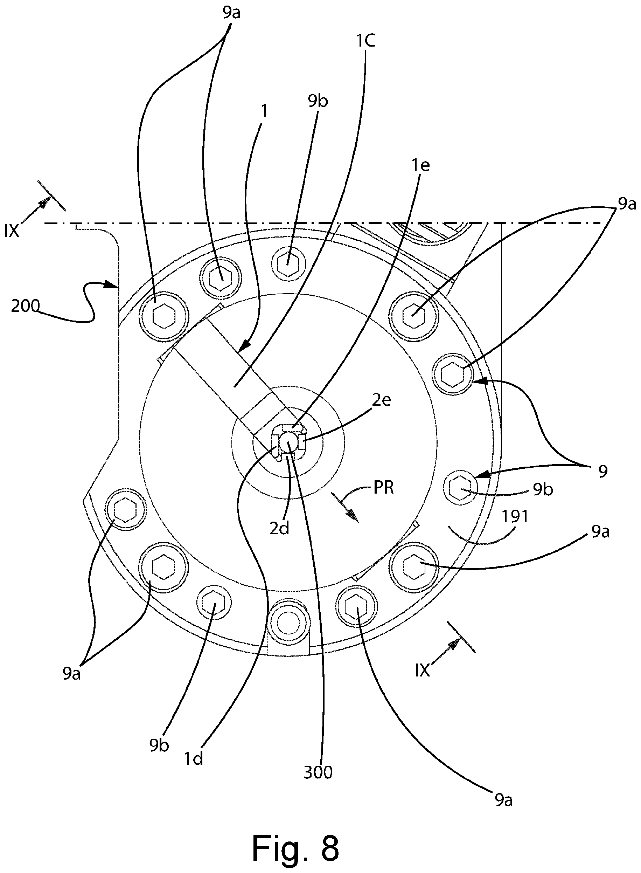

According to the present invention, as will be described more in detail below with particular reference to the two exemplary embodiments illustrated in Figure 5 (first embodiment) and in Figures 7 and 8 (second embodiment), the apparatus comprises a pressing member 1 configured for selectively moving and engaging conductor 300 to cause said conductor 300 to engage a reaction surface 2 proximate to aperture 80 through which said conductor 300 is configured to be fed. Pressing member 1 is positioned, along feeding direction 10' of conductor 300, before engagement members 112, 112' capable of bending conductor 300.

Owing to these measures, it is possible to precisely and repeatedly control the engagement between conductor 300 and reaction surface 2. This results in higher accuracy and repeatability of the bending of conductor 300, which is achieved through the action of engagement members 112 and 112'. Moreover, according to a preferred aspect, the accurate control over the engagement between conductor 300 and reaction surface 2 and the consequent programmability of the forces applied to conductor 300 make it possible to use he same apparatus for bending differently sized conductors (e.g. to make the apparatus compatible with conductors having different diameters) and to obtain hairpins having different configurations.

With reference to Figure 5, the following will describe more in detail further preferred technical features of the apparatus made in accordance with the first embodiment of the present invention. Such figure shows, in fact, some preferred or optional details associated with pressing member 1.

Preferably, pressing member 1 is configured to apply a force on conductor 300 in a thrust direction PR substantially transverse to feeding direction 10' during the bending of the conductor carried out by engagement members 112 and 112', in order to cause conductor 300 to engage reaction surface 2. More preferably, pressing member 1 is configured for assuming a selectable predetermined position along said thrust direction PR, which is substantially transverse to feeding direction 10', to apply the force on conductor 300.

Advantageously, but not necessarily, the apparatus further comprises a distribution nozzle 191 axially including, at its end, aperture 80 through which electric conductor 300 is configured to pass. As will be described more in detail hereinafter, in such first embodiment distribution nozzle 191 is mounted movable with respect to a frame 200 (or, more generally, a supporting portion) of the apparatus.

In particular, the apparatus comprises an actuator 5 configured for causing pressing member 1 to move in the substantially transverse thrust direction PR. More particularly, actuator 5 is configured for translatably moving in feeding direction 10'.

Preferably, the apparatus further comprises a transmission mechanism 4 configured for converting a movement of actuator member 5 into a movement of pressing member 1 in the substantially transverse thrust direction PR. In particular, transmission mechanism 4 is configured for converting a translational movement of actuator 5 in thrust direction 10' into a movement of pressing member 1 in thrust direction PR.

Still with reference to the first embodiment shown in Figure 5, actuator member 5 is integral with distribution nozzle 191. In particular, the apparatus also includes a connection member 3 configured for mechanically connecting actuator member 5 and distribution nozzle 191, making them integral with each other.

By way of example, as illustrated in Figure 4, actuator 5 comprises a shaft 190, while connection member 3 comprises a flange 193. Shaft 190 and flange 193 are described and indicated herein by means of the same reference numerals used in International patent application publication WO 2015/132180. As described therein by way of non-limiting example, shaft 190 is connected to distribution nozzle 191 through flange 193. Also, shaft 190 can be moved in feeding direction 10' by a worm-screw drive unit 400. Such drive unit 400 causes guide 198, supported by rail 199, to translate in feeding direction 10' (and in the opposite direction), depending on the imparted direction of rotation. Arm 197 is supported by guide 198 and is fixed to the end of shaft 190, which can thus translate in the feeding direction when drive unit 400 is operated, thereby moving distribution nozzle 191.

Preferably, distribution nozzle 191 has a transverse passage 6 through which pressing member 1 can pass. Moreover, in a position facing towards transverse passage 6, distribution nozzle 191 internally carries reaction surface 2, against which conductor 300 is configured to engage under the action of pressing member 1 as the latter passes through transverse passage 6.

In such first illustrative embodiment, with reference to Figure 5, pressing member 1 is configured to apply said force on one side only of the cross-section of said conductor 300.

In particular, with reference to Figure 5, pressing member 1 is a terminal finger 1a configured to move and push, in a controlled manner, conductor 300 against reaction surface 2.

In the first embodiment, transmission mechanism 4 is a rod - crank mechanism. In particular, transmission mechanism 4 is configured for converting the translational movement imparted by actuator member 5 (and then transferred from connection member 3 to distribution nozzle 191) into a movement, in particular a rotational or oscillating movement, of pressing member 1 in thrust direction PR. Thus, pressing member 1 - and preferably its terminal finger 1a - will move to push conductor 300.

In the first embodiment, said rod - crank mechanism comprises a rod member 4a and a crank member 4b hinged to and co-operating with each other.

Rod member 4a is hinged, on one side, to a frame 200 (or a stationary support portion) of the apparatus and, on the other side, to crank member 4b. In turn, crank member 4b hinged to rod member 4a is rotatably supported around a pivot member 7 carried by distribution nozzle 191.

More in detail, by way of example, the fixed point where rod member 4a is hinged to frame 200 is indicated by reference 8a, while the movable point where rod member 4a is hinged to crank member 4b is indicated by reference 8b. Furthermore, the movable point where crank member 4b is rotatably supported (which can move integrally with pivot member 7 of distribution nozzle 191) is indicated by reference 8c.

In particular, crank member 4b is configured for moving pressing member 1 in thrust direction PR; in particular, pressing member 1 is integral with crank member 4b, being for example carried radially thereon. Pivot member 7 is mounted to distribution nozzle 191, e.g. being a shelf fixed to (in particular, by means of screws) and protruding transversally from distribution nozzle 191.

Preferably, the position of rod member 4a relative to crank member 4b is adjustable, so that the action of pressing member 1 can be adjusted as a function of the bending to which the conductor, fed by distribution nozzle 191, is to be subjected. For example, the adjustability of the position of rod member 4a with respect to crank member 4b is obtained by changing the relative position of mutually sliding portions (e.g. telescopic ones) belonging to the rod member and including the previously described hinge points 8a and 8b.

The following will briefly describe, for completeness' sake, an operative phase wherein the apparatus according to the first embodiment controls the engagement of conductor 300.

As actuator member 5 translates forward along feeding direction 10' integrally with pivot member 7 (carried by distribution nozzle 191, which in turn is supported by connection member 3), pressing member 1 moves - by oscillating or rotating - closer to conductor 300 in thrust direction PR under the action of transmission mechanism 4. In particular, as movable rotational support point 8c moves, crank member 4b makes a clockwise (when viewing Figure 5) rotation; this causes terminal finger 1a of pressing member 1 to move forwards in thrust direction PR and to engage conductor 300 against reaction surface 2. Vice versa, when actuator member 5 translates backwards along feeding direction 10', a reverse movement of terminal finger 1a occurs in the direction opposite to thrust direction PR.

In the first embodiment illustrated in Figure 5, actuator member 5, connection member 3, transmission mechanism 4 and pressing member 1 are placed externally to distribution nozzle 191.

Figures 6 to 9 show the apparatus represented in Figure 4 made in accordance with a second embodiment of the present invention, illustrating some preferred or optional details associated with pressing member 1.

Those parts and elements which are similar to - or which perform the same function as - those of the above-described embodiment have been assigned the same reference numerals. For simplicity, the description of such parts and elements will not be repeated below, and reference should be made to the above description of the preceding embodiment.

In the second illustrative embodiment, pressing member 1 is configured to apply said force on two sides of the cross-section of said conductor 300. In particular, such sides are adjacent.

Unlike the first embodiment illustrated herein, distribution nozzle 191 is mounted substantially stationary with respect to frame 200 of the apparatus and is not movable under the action of actuator member 5. In fact, as will be described more in detail below, connection member 3 (e.g. its flange 193) is slidably mounted in distribution nozzle 191, so as to cause the displacement of pressing member 1 via the associated transmission mechanism 4.

As visible in Figure 8, distribution nozzle 191 is fixed, in particular at the front, to frame 200 by means of a plurality of screws 9. For example, said screws 9 comprise a plurality of fastening screws 9a and a plurality of adjustment screws or dowels 9b configured to adjust the position of distribution nozzle 191 with respect to the frame along feeding direction 10'.

In particular, with reference to Figures 6 to 9, pressing member 1 is a movable body 1c that can slide transversally within distribution nozzle 191. Advantageously, but not necessarily, movable body 1c is axially constrained to distribution nozzle 191, being only capable of moving transversally relative to the latter. In said figure, the structure of the illustrated engagement members 112, 112' is different from that of those shown in Figure 4; nevertheless, engagement members 112, 112' still perform the same function of engaging the conductor and applying a transverse force in order to bend it by their movements.

In the second embodiment, movable body 1c comprises a pair of internal thrust faces 1d, 1e adjacent to each other, which form the sides whereon said force is applied. Accordingly, reaction surface 2 carried by distribution nozzle 191 defines an associated pair of internal reaction faces 2d, 2e adjacent to each other and transversally facing towards internal thrust faces 1d, 1e. In operation, as conductor 300 is fed through the cavity of distribution nozzle 191 in the section upstream of aperture 80, it becomes surrounded by internal thrust faces 1d, 1e and by internal reaction faces 2d, 2e. In particular, owing to transmission mechanism 4, an axial or longitudinal displacement of connection member 3 in feeding direction 10' corresponds to an associated transverse displacement of movable body 1c, so that internal thrust faces 1d, 1e will apply, in a controlled manner, a transverse force on two adjacent sides of conductor 300 against reaction surface 2 defined by internal reaction faces 2d, 2e.

In the second embodiment, transmission mechanism 4 is a cam mechanism. In particular, transmission mechanism 4 is configured for converting the translational motion in feeding direction 10' imparted to connection member 3 into a translation of pressing member 1 in thrust direction PR, thus causing internal thrust faces 1d, 1e to move and push conductor 300. For example, said cam mechanism comprises an elongated hole 4c formed in pressing member 1, which is inclined relative to the feeding direction; moreover, the cam mechanism comprises also a slider 4d integral with connection member 3, which can slide in the elongated hole 4c. In particular, pressing member 1 acts as a follower, since it is moved due to the axial movement of slider 4d of connection member 3 that transversally pushes elongated hole 4c.

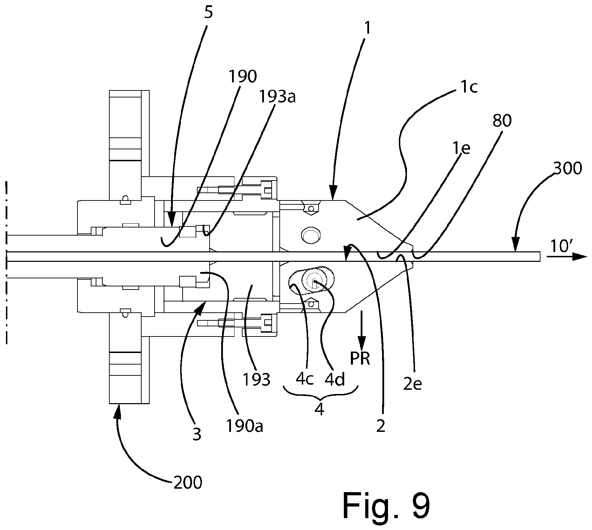

With particular reference to Figure 9, movable body 1c is, when viewed in an axial or longitudinal section, substantially L-shaped.

In particular, as shown by way of example in Figure 9, movable body 1c lies, and is movable in a guided manner by transmission mechanism 4, in an axial plane belonging to the bundle of planes generated by said feeding axis AC'.

Also in the second embodiment, with reference to the representation shown in Figure 4, actuator member 5 comprises shaft 190, while connection member 3 comprises flange 193, which can be connected to each other.

In the second embodiment, therefore, differently from Figure 4, shaft 190 is not prearranged for controlling the movement of distribution nozzle 191 parallel to the feeding direction, but for controlling the action of pressing member 1.

In the second embodiment, with particular reference to Figures 7 and 9, connection member 3 is connected to actuator member 5 by means of a quick-coupling mechanism, e.g. a bayonet-type coupling. In the illustrated embodiment, this coupling occurs between flange 193 and shaft 190. In particular, flange 193 has an elongated seat 193a, while shaft 190 has a T-shaped terminal head 190a configured to be inserted and then turned in elongated seat 193a. An integral assembly can thus be created, which can be easily mounted to the rest of the apparatus, wherein such assembly comprises distribution nozzle 191, connection member 3 and pressing member 1, including transmission mechanism 4.

Advantageously, the quick-coupling mechanism is configured to permit a releasable and restorable coupling between connection member 3 (e.g. flange 193) and actuator member 5 (e.g. shaft 190). This makes it possible to reversibly separate said assembly from the rest of the apparatus. The apparatus can thus be adapted for processing conductors 300 of different sizes and cross-sectional shapes and/or for different types of bends of the hairpins to be manufactured, simply by using different types of such assemblies depending on the desired operating conditions of the apparatus.

In the second embodiment illustrated in Figures 6 to 9, connection member 3, transmission mechanism 4 and pressing member 1 are mounted inside distribution nozzle 191.

The following will describe some preferred aspects of both embodiments illustrated herein, in regards to the application of the force by pressing member 1 in thrust direction PR.

Preferably, the force by means of which pressing member 1 engages conductor 300 is reduced during the feeding of conductor 300 towards engagement members 112, 112'.

Preferably, the force by means of which pressing member 1 engages conductor 300 is increased during the transverse movement and engagement of conductor 300 against engagement members 112, 112'. This results in the bending of the portions of electric conductor 300 intended to form coil members 20.

Preferably, the force by means of which pressing member 1 engages conductor 300 is kept substantially constant during the feeding of conductor 300 and the simultaneous transverse engagement of conductor 300 against engagement members 112, 112', without said engagement members 112, 112' being moved. This creates a curvature of the portions of electric conductor 300 intended to form said coil members 20.

Of course, without prejudice to the principle of the invention, the forms of embodiment and the implementation details may be extensively varied from those described and illustrated herein by way of non-limiting example, without however departing from the scope of the present invention as set out in the appended claims.

For example, in the illustrated embodiments the apparatus comprises a plurality, in particular a pair, of engagement members 112, 112'. However, in further implementation variants the apparatus may include just one engagement member.

Furthermore, the technical characteristics that differentiate the various embodiments and variants thereof described and illustrated herein are freely interchangeable, whenever compatible.

## Claims

1. Apparatus for manufacturing coil members (20) for insertion into slots (21) of the core of a dynamo-electric machine; said coil members (20) being formed by bending portions of an electric conductor (300); said apparatus comprising:
- feeding means configured for feeding portions of said conductor (300) having a predetermined length through an aperture (80); said portions being fed along a feeding axis (AC') in a feeding direction (10') and adjacent to at least one engagement member (112, 112') capable of engaging said conductor (300); said aperture (80) being positioned before the engagement member (112, 112') in the feeding direction (10'); and
- moving means configured for moving the engagement member (112, 112') with respect to the aperture (80) to engage a part of the conductor (300) with the engagement member (112, 112') in a transverse direction (X, X') to the feeding axis (AC'), so as to bend said conductor (300);
said apparatus being **characterized in that** it further comprises a pressing member (1) configured to be moved and to selectively engage said conductor (300) to cause said conductor (300) to engage a reaction surface (2) which is proximate to said aperture (80); said pressing member (1) being situated before said engagement member (112, 112') in said feeding direction (10') of said conductor (300), thereby implying the high accuracy and repeatability of the bending of the conductor (300) obtained by means of said engaging member (112, 112').

2. Apparatus according to claim 1, wherein said pressing member (1) is configured to apply a force on said conductor (300) in a thrust direction (PR) substantially transverse to said feeding direction (10') during the bending of said conductor (300) carried out by said engagement members (112, 112'), to cause said conductor (300) to engage said reaction surface (2).

3. Apparatus according to claim 2, wherein said pressing member (1) is configured for assuming a selectable predetermined position along said thrust direction (PR) to apply said force on said conductor (300).

4. Apparatus according to claim 2 or 3, further comprising a distribution nozzle (191) axially including said aperture (80).

5. Apparatus according to claim 4, wherein said distribution nozzle (191) has a transverse passage (6) configured to allow said pressing member (1) to pass through it, and, in a position facing towards said transverse passage (6), said distribution nozzle (191) internally carries said reaction surface (2) which said conductor (300) is configured to engage under the action of said pressing member (1).

6. Apparatus according to any one of claims 2 to 5, wherein said pressing member (1) is configured to apply said force on at least two sides of the cross-section of said conductor (300).

7. Apparatus according to claim 6, wherein said two sides are adjacent.

8. Apparatus according to any one of claims 2 to 7, further comprising an actuator member (5, 190) configured to cause the pressing member (1) to move in said substantially transverse thrust direction (PR).

9. Apparatus according to claim 8, wherein said actuator member (5, 190) is configured to operate in said feeding direction (10').

10. Apparatus according to claim 9, further comprising a transmission mechanism (4) configured to cause the pressing member (1) to move in said substantially transverse thrust direction (PR) when said actuator member (5, 190) moves in said feeding direction (10').

11. Apparatus according to claim 10, wherein said transmission mechanism (4) is a rod - crank mechanism (4a, 4b).

12. Apparatus according to claim 10, wherein said transmission mechanism (4) is a cam mechanism (4c, 4d).

13. Apparatus according to any one of claims 8 to 12, further comprising a connection member (3, 193) connected to said actuator member (5, 190).

14. Apparatus according to claim 13, wherein said connection member (3, 193) is connected to said actuator member (5) by means of a quick-coupling mechanism (190a, 193a).

15. Apparatus according to claim 13 or 14, wherein said connection member (3, 193) is mounted integral with the distribution nozzle (191).

16. Apparatus according to claim 13 or 14, wherein said connection member (3) is mounted movable with respect to the distribution nozzle (191).

17. Method for manufacturing coil members (20) for insertion into slots (21) of the core of a dynamo-electric machine; said coil members (20) being formed by bending portions of an electric conductor (300); said method comprising the following steps:
- feeding portions of said conductor (300) having a predetermined length through an aperture (80); said portions being fed along a feeding axis (AC') in a feeding direction (10') and adjacent to at least one engagement member (112, 112') capable of engaging said conductor (300); said aperture (80) being positioned before the engagement member (112, 112') in the feeding direction (10');
- moving the engagement member (112, 112') with respect to the aperture (80) to engage a portion of the conductor (300) with the engagement member (112, 112') in a transverse direction (X, X') to the feeding axis (AC'), so as to bend said conductor (300);
said method being **characterized in that** it comprises the step of:
- pressing said conductor (300) by moving and engaging a pressing member (1) against said conductor in order to cause said conductor (300) to engage a reaction surface (2) which is proximate to said aperture (80); said pressing member (1) being situated before said engagement member (112, 112') in said feeding direction (10') of said conductor (300), thereby implying the high accuracy and repeatability of the bending of the conductor (300) obtained by means of said engaging member (112, 112').

18. Method according to claim 17, wherein said step of selectively pressing said conductor (300) is carried out by causing said pressing member (1) to apply a force on said conductor (300) in a thrust direction (PR) substantially transverse to said feeding direction (10') during the bending of said conductor (300) carried out by said engagement members (112, 112'), to cause said conductor (300) to engage said reaction surface (2).

19. Method according to claim 18, wherein said step of selectively pressing said conductor (300) is carried out by causing said pressing member (1) to assume a selectable predetermined position along said thrust direction (PR) to apply said force on said conductor (300).

20. Method according to any one of claims 17 to 19, wherein a distribution nozzle (191) is included which has a transverse passage (6) and which, in a position facing towards said transverse passage (6), internally carries said reaction surface (2); said step of selectively pressing said conductor (300) is carried out by causing said pressing member (1) to pass through said lateral passage (6) to cause said conductor (300) to engage said reaction surface by means of said pressing member (1).

21. Method according to any one of claims 17 to 20, wherein the force by means of which said pressing member (1) engages said conductor (300) during said step of selectively pressing said conductor (300) is reduced during the feeding of said conductor (300) towards said engagement members (112, 112').

22. Method according to any one of claims 17 to 21, wherein the force by means of which said pressing member (1) engages said conductor (300) during said step of selectively pressing said conductor (300) is increased during the transverse movement and engagement of said conductor (300) against said engagement members (112, 112'), so as to bend said portions of electric conductor (300) intended to form said coil members (20).

23. Method according to any one of claims 17 to 22, wherein the force by means of which said pressing member (1) engages said conductor (300) during said step of selectively pressing said conductor (300) is kept substantially constant during the feeding of said conductor (300) and the simultaneous transverse engagement of said conductor (300) against said engagement members (112, 112'), without said engagement members (112, 112') being moved, in order to achieve a curvature of said portions of electric conductor (300) intended to form said coil members (20).

## Patentansprüche

1. Vorrichtung zum Herstellen von Wicklungselementen (20) zum Einsetzen in Nuten (21) des Kerns einer dynamoelektrischen Maschine, wobei die Wicklungselemente (20) durch Biegen von Abschnitten eines elektrischen Leiters (300) gebildet werden; umfassend:
- Zuführeinrichtungen, die dazu ausgebildet sind, Abschnitte des Leiters (300) mit vorbestimmter Länge durch eine Öffnung (80) hindurchzuführen; wobei die Abschnitte entlang einer Zuführachse (AC') in einer Zuführrichtung (10') und an mindestens einem Eingriffselement (112, 112') vorbei zugeführt werden, welches in der Lage ist, mit dem Leiter (300) in Eingriff zu treten; wobei die Öffnung (80) in Zuführrichtung (10') vor dem Eingriffselement (112, 112') angeordnet ist; und
- Bewegungseinrichtungen, die dazu ausgebildet sind, das Eingriffselement (112, 112') relativ zu der Öffnung (80) zu bewegen, um einen Abschnitt des Leiters (300) quer zur Zuführachse (AC') in einer Querrichtung (X, X') mit dem Eingriffselement (112, 112') in Eingriff zu bringen, um den Leiter (300) zu biegen;
- **dadurch gekennzeichnet, dass** die Vorrichtung ferner ein Andrückelement (1) umfasst, das dazu ausgebildet ist, durch Bewegung wahlweise mit dem Leiter (300) in Eingriff zu treten, um den Leiter (300) an eine Reaktionsfläche (2) anzulegen, welche sich in unmittelbarer Nähe zu der Öffnung (80) befindet; wobei das Andrückelement (1) in der Zuführrichtung (10') des Leiters (300) vor dem Eingriffselement (112, 112') angeordnet ist

2. Vorrichtung nach Anspruch 1, wobei das Andrückelement (1) dazu ausgebildet ist, während des Biegens des Leiters (300) durch die Eingriffselemente (112, 112') eine Kraft in einer Druckrichtung (PR), die im Wesentlichen quer zur Zuführrichtung (10') verläuft, auf den Leiter (300) auszuüben, um den Leiter (300) an die Reaktionsfläche (2) anzulegen.

3. Vorrichtung nach Anspruch 2, wobei das Andrückelement (1) dazu ausgebildet ist, eine vorbestimmte wählbare Position entlang der Druckrichtung (PR) einzunehmen, um die Kraft auf den Leiter (300) aufzubringen.

4. Vorrichtung nach Anspruch 2 oder 3, ferner umfassend eine Verteilerdüse (191), die axial die Öffnung (80) aufweist.

5. Vorrichtung nach Anspruch 4, wobei die Verteilerdüse (191) einen Querkanal (6) aufweist, der dazu ausgebildet ist, das Durchtreten des Andrückelements (1) durch die Verteilerdüse (191) zu ermöglichen, und wobei die Verteilerdüse (191) in einer Stellung, in der sie dem Querkanal (6) zugewandt ist, die Reaktionsfläche (2) im Inneren trägt, an welche der Leiter (300) unter Einwirkung des Andrückelements (1) anzulegen ist.

6. Vorrichtung nach einem der Ansprüche 2 bis 5, wobei das Andrückelement (1) dazu ausgebildet ist, die Kraft auf zumindest zwei Seiten des Querschnitts des Leiters (300) aufzubringen.

7. Vorrichtung nach Anspruch 6, wobei die zwei Seiten benachbart sind.

8. Vorrichtung nach einem der Ansprüche 2 bis 7, ferner umfassend ein Betätigungselement (5, 190), das dazu ausgebildet ist, das Andrückelement (1) in der im Wesentlichen querverlaufenden Druckrichtung (PR) zu bewegen.

9. Vorrichtung nach Anspruch 8, wobei das Betätigungselement (5, 190) dazu ausgebildet ist, in der Zuführrichtung (10') zu arbeiten.

10. Vorrichtung nach Anspruch 9, ferner umfassend einen Übertragungsmechanismus (4), der dazu ausgebildet ist, das Andrückelement (1) in der im Wesentlichen querverlaufenden Druckrichtung (PR) zu bewegen, wenn sich das Betätigungselement (5, 190) in der Zuführrichtung (10') bewegt.

11. Vorrichtung nach Anspruch 10, wobei der Übertragungsmechanismus (4) ein Stangen-Kurbel-Mechanismus (4a, 4b) ist.

12. Vorrichtung nach Anspruch 10, wobei der Übertragungsmechanismus (4) ein Nockenmechanismus (4c, 4d) ist.

13. Vorrichtung nach einem der Ansprüche 8 bis 12, ferner umfassend ein Verbindungselement (3, 193), das mit dem Betätigungselement (5, 190) verbunden ist.

14. Vorrichtung nach Anspruch 13, wobei das Verbindungselement (3, 193) mittels eines Schnellkupplungsmechanismus (190a, 193a) mit dem Betätigungselement (5) verbunden ist.

15. Vorrichtung nach Anspruch 13 oder 14, wobei das Verbindungselement (3, 193) untrennbar mit der Verteilerdüse (191) verbunden ist.

16. Vorrichtung nach Anspruch 13 oder 14, wobei das Verbindungselement (3) gegenüber der Verteilerdüse (191) beweglich gelagert ist.

17. Verfahren zum Herstellen von Wicklungselementen (20) zum Einsetzen in Nuten (21) des Kerns einer dynamoelektrischen Maschine, wobei die Wicklungselemente (20) durch Biegen von Abschnitten eines elektrischen Leiters (300) gebildet werden; umfassend die folgenden Schritte:
- Zuführen von Abschnitten des Leiters (300) mit vorbestimmter Länge durch eine Öffnung (80); wobei die Abschnitte entlang einer Zuführachse (AC') in einer Zuführrichtung (10') und an mindestens einem Eingriffselement (112, 112') vorbei zugeführt werden, das in der Lage ist, mit dem Leiter (300) in Eingriff zu treten; wobei die Öffnung (80) in der Zuführrichtung (10') vor dem Eingriffselement (112, 112') angeordnet ist;
- Bewegen des Eingriffselements (112, 112') relativ zur Öffnung (80), um einen Abschnitt des Leiters (300) quer zur Zuführachse (AC') mit dem Eingriffselement (112, 112') in Eingriff zu bringen, um den Leiter (300) zu biegen;
- **dadurch gekennzeichnet, dass** das Verfahren ferner den Schritt umfasst:
- Andrücken des Leiters (300) durch Bewegen und in Eingriff bringen eines Andrückelements (1) gegen den Leiter (300), um den Leiter (300) an eine Reaktionsfläche (2) anzulegen, die sich in unmittelbarer Nähe zu der Öffnung (80) befindet; wobei das Andrückelement (1) in der Zuführrichtung (10') des Leiters (300) vor dem Eingriffselement (112, 112') angeordnet ist.

18. Verfahren nach Anspruch 17, wobei der Schritt des selektiven Andrückens des Leiters (300) durch das Andrückelement (1) umfasst, während des Biegens des Leiters (300) durch die Eingriffselemente (112, 112') eine Kraft in einer Druckrichtung (PR), die im Wesentlichen quer zur Zuführrichtung (10') verläuft, auf den Leiter (300) auszuüben, um den Leiter (300) an die Reaktionsfläche (2) anzulegen.

19. Verfahren nach Anspruch 18, wobei der Schritt des selektiven Andrückens des Leiters (300) darin besteht, das Andrückelement (1) eine wählbare vorbestimmte Position entlang der Druckrichtung (PR) einnehmen zu lassen, um die Kraft auf den Leiter (300) aufzubringen.

20. Verfahren nach einem der Ansprüche 17 bis 19, wobei eine Verteilerdüse (191) vorgesehen ist, die einen Querkanal (6) aufweist und die in einer dem Querkanal (6) zugewandten Position die Reaktionsfläche (2) im Inneren trägt; wobei der Schritt des selektiven Andrückens des Leiters (300) dadurch ausgeführt wird, dass das Andrückelement (1) durch den Querkanal (6) geführt wird, sodass der Leiter (300) mittels Andrückelement (1) mit der Reaktionsfläche (2) in Anlage gebracht wird.

21. Verfahren nach einem der Ansprüche 17 bis 20, wobei die Kraft, mit welcher das Andrückelement (1) während des selektiven Andrückschritts auf den Leiter (300) einwirkt, während des Zuführens des Leiters (300) in Richtung auf die Eingriffselemente (112, 112') verringert wird.

22. Verfahren nach einem der Ansprüche 17 bis 21, wobei die Kraft, mit welcher das Andrückelement (1) während des selektiven Andrückschritts auf den Leiter (300) einwirkt, während der Querbewegung und dem Eingriff des Leiters (300) gegen die Eingriffselemente (112, 112') erhöht wird, um jene Leiterabschnitte, die zur Bildung der Wicklungselemente (20) bestimmt sind, zu biegen.

23. Verfahren nach einem der Ansprüche 17 bis 22, wobei die Kraft, mit welcher das Andrückelement (1) während des selektiven Andrückschritts auf den Leiter (300) einwirkt, während des Zuführens des Leiters (300) und des gleichzeitigen seitlichen Eingriffs gegen die Eingriffselemente (112, 112'), ohne dass die Eingriffselemente (112, 112') bewegt werden, im Wesentlichen konstant gehalten wird, um eine Krümmung jener Leiterabschnitte zu erreichen, die zur Bildung der Wicklungselemente (20) bestimmt sind.

## Revendications

1. Appareil pour fabriquer des éléments de bobine (20) à insérer dans des fentes (21) du noyau d'une machine dynamo-électrique ; lesdits éléments de bobine (20) étant formés par flexion de parties d'un conducteur électrique (300) ; ledit appareil comprenant :
- des moyens d'alimentation configurés pour alimenter des parties dudit conducteur (300) présentant une longueur prédéterminée à travers une ouverture (80) ; lesdites parties étant alimentées le long d'un axe d'alimentation (AC') dans une direction d'alimentation (10') et adjacentes à au moins un élément de mise en prise (112, 112') capable de venir en prise avec ledit conducteur (300) ; ladite ouverture (80) étant positionnée avant l'élément de mise en prise (112, 112') dans la direction d'alimentation (10') ; et
- des moyens de déplacement configurés pour déplacer l'élément de mise en prise (112, 112') par rapport à l'ouverture (80) afin de mettre en prise une partie du conducteur (300) avec l'élément de mise en prise (112, 112') dans une direction transversale (X, X') à l'axe d'alimentation (AC'), de manière à faire fléchir ledit conducteur (300) ;
ledit appareil étant **caractérisé en ce qu'**il comprend en outre un élément de pressage (1) configuré pour être déplacé et pour mettre en prise de manière sélective ledit conducteur (300) afin d'amener ledit conducteur (300) à venir en prise avec une surface de réaction (2) qui est située à proximité de ladite ouverture (80) ; ledit élément de pressage (1) étant situé avant ledit élément de mise en prise (112, 112') dans ladite direction d'alimentation (10') dudit conducteur (300), en impliquant ainsi la précision et la répétabilité élevées de la flexion du conducteur (300) obtenue par l'intermédiaire dudit élément de mise en prise (112, 112').

2. Appareil selon la revendication 1, dans lequel ledit élément de pressage (1) est configuré pour appliquer une force sur ledit conducteur (300) dans une direction de poussée (PR) sensiblement transversale à ladite direction d'alimentation (10') pendant la flexion dudit conducteur (300) effectuée par lesdits éléments de mise en prise (112, 112'), pour amener ledit conducteur (300) à venir en prise avec ladite surface de réaction (2).

3. Appareil selon la revendication 2, dans lequel ledit élément de pressage (1) est configuré pour prendre une position prédéterminée sélectionnable le long de ladite direction de poussée (PR) afin d'appliquer ladite force sur ledit conducteur (300).

4. Appareil selon la revendication 2 ou 3, comprenant en outre une buse de distribution (191) incluant axialement ladite ouverture (80).

5. Appareil selon la revendication 4, dans lequel ladite buse de distribution (191) présente un passage transversal (6) configuré pour permettre audit élément de pressage (1) de le traverser, et, dans une position orientée vers ledit passage transversal (6), ladite buse de distribution (191) porte intérieurement ladite surface de réaction (2) avec laquelle ledit conducteur (300) est configuré pour venir en prise sous l'action dudit élément de pressage (1).

6. Appareil selon l'une quelconque des revendications 2 à 5, dans lequel ledit élément de pressage (1) est configuré pour appliquer ladite force sur au moins deux côtés de la section transversale dudit conducteur (300).

7. Appareil selon la revendication 6, dans lequel lesdits deux côtés sont adjacents.

8. Appareil selon l'une quelconque des revendications 2 à 7, comprenant en outre un élément d'actionnement (5, 190) configuré pour amener l'élément de pressage (1) à se déplacer dans ladite direction de poussée sensiblement transversale (PR).

9. Appareil selon la revendication 8, dans lequel ledit élément d'actionnement (5, 190) est configuré pour fonctionner dans ladite direction d'alimentation (10').

10. Appareil selon la revendication 9, comprenant en outre un mécanisme de transmission (4) configuré pour amener l'élément de pressage (1) à se déplacer dans ladite direction de poussée sensiblement transversale (PR) lorsque ledit élément d'actionnement (5, 190) se déplace dans ladite direction d'alimentation (10').

11. Appareil selon la revendication 10, dans lequel ledit mécanisme de transmission (4) est un mécanisme à bielle-manivelle (4a, 4b).

12. Appareil selon la revendication 10, dans lequel ledit mécanisme de transmission (4) est un mécanisme à came (4c, 4d).

13. Appareil selon l'une quelconque des revendications 8 à 12, comprenant en outre un élément de connexion (3, 193) connecté audit élément actionneur (5, 190).

14. Appareil selon la revendication 13, dans lequel ledit élément de connexion (3, 193) est connecté audit élément actionneur (5) au moyen d'un mécanisme de couplage rapide (190a, 193a).

15. Appareil selon la revendication 13 ou 14, dans lequel ledit élément de connexion (3, 193) est monté d'un seul tenant avec la buse de distribution (191).

16. Appareil selon la revendication 13 ou 14, dans lequel ledit élément de connexion (3) est monté mobile par rapport à la buse de distribution (191).

17. Procédé de fabrication d'éléments de bobine (20) à insérer dans des fentes (21) du noyau d'une machine dynamo-électrique ; lesdits éléments de bobine (20) étant formés par flexion de parties d'un conducteur électrique (300) ; ledit procédé comprenant les étapes suivantes consistant à :
- alimenter des parties dudit conducteur (300) présentant une longueur prédéterminée à travers une ouverture (80) ; lesdites parties étant alimentées le long d'un axe d'alimentation (AC') dans une direction d'alimentation (10') et adjacentes à au moins un élément de mise en prise (112, 112') capable de venir en prise avec ledit conducteur (300) ; ladite ouverture (80) étant positionnée avant l'élément de mise en prise (112, 112') dans la direction d'alimentation (10') ;
- déplacer l'élément de mise en prise (112, 112') par rapport à l'ouverture (80) pour mettre en prise une partie du conducteur (300) avec l'élément de mise en prise (112, 112') dans une direction transversale (X, X') à l'axe d'alimentation (AC'), de manière à faire fléchir ledit conducteur (300) ;
ledit procédé étant **caractérisé en ce qu'**il comprend l'étape consistant à :
- presser ledit conducteur (300) en déplaçant et en mettant en prise un élément de pressage (1) contre ledit conducteur afin d'amener ledit conducteur (300) à venir en prise avec une surface de réaction (2) qui est proche de ladite ouverture (80) ; ledit élément de pressage (1) étant situé avant ledit élément de mise en prise (112, 112') dans ladite direction d'alimentation (10') dudit conducteur (300), en impliquant ainsi la précision et la répétabilité élevées de la flexion du conducteur (300) obtenue au moyen dudit élément de mise en prise (112, 112').

18. Procédé selon la revendication 17, dans lequel ladite étape de pressage sélectif dudit conducteur (300) est effectuée en amenant ledit élément de pressage (1) à appliquer une force sur ledit conducteur (300) dans une direction de poussée (PR) sensiblement transversale à ladite direction d'alimentation (10') pendant la flexion dudit conducteur (300) effectuée par lesdits éléments de mise en prise (112, 112'), pour amener ledit conducteur (300) à venir en prise avec ladite surface de réaction (2).

19. Procédé selon la revendication 18, dans lequel ladite étape de pressage sélectif dudit conducteur (300) est effectuée en amenant ledit élément de pressage (1) à prendre une position prédéterminée sélectionnable le long de ladite direction de poussée (PR) pour appliquer ladite force sur ledit conducteur (300).

20. Procédé selon l'une quelconque des revendications 17 à 19, dans lequel une buse de distribution (191) est incluse, qui présente un passage transversal (6) et qui, dans une position orientée vers ledit passage transversal (6), porte intérieurement ladite surface de réaction (2) ; ladite étape de pressage sélectif dudit conducteur (300) est effectuée en amenant ledit élément de pressage (1) à passer à travers ledit passage latéral (6) pour amener ledit conducteur (300) à venir en prise avec ladite surface de réaction par l'intermédiaire dudit élément de pressage (1).

21. Procédé selon l'une quelconque des revendications 17 à 20, dans lequel la force par l'intermédiaire de laquelle ledit élément de pression (1) met en prise ledit conducteur (300) pendant ladite étape de pressage sélectif dudit conducteur (300) est réduite pendant l'alimentation dudit conducteur (300) vers lesdits éléments de mise en prise (112, 112').

22. Procédé selon l'une quelconque des revendications 17 à 21, dans lequel la force par l'intermédiaire de laquelle ledit élément de pression (1) met en prise ledit conducteur (300) pendant ladite étape de pressage sélectif dudit conducteur (300) est augmentée pendant le déplacement transversal et la mise en prise dudit conducteur (300) contre lesdits éléments de mise en prise (112, 112'), de manière à faire fléchir lesdites parties de conducteur électrique (300) destinées à former lesdits éléments de bobine (20).

23. Procédé selon l'une quelconque des revendications 17 à 22, dans lequel la force par l'intermédiaire de laquelle ledit élément de pressage (1) met en prise ledit conducteur (300) au cours de ladite étape de pressage sélectif dudit conducteur (300) est maintenue sensiblement constante au cours de l'alimentation dudit conducteur (300) et de la mise en prise transversale simultanée dudit conducteur (300) contre lesdits éléments de mise en prise (112, 112'), sans que lesdits éléments de mise en prise (112, 112') ne soient déplacés, afin d'obtenir une courbure desdites parties de conducteur électrique (300) destinées à former lesdits éléments de bobine (20).
